# FASCICULE DE BREVET EUROPEEN

(11) **EP 1 637 853 B1**
(45) Date de publication et mention de la délivrance du brevet: **10.11.2010**
(21) Numéro de dépôt: 05354029.0
(22) Date de dépôt: 11.08.2005
(51) Int. Cl.: G01J 5/10

(54) **Détecteur thermique de rayonnement électromagnétique comportant une membrane absorbante fixée en suspension**
Thermisches Strahlungsdetektor mit einer im Abstand aufgehängten absorbierenden Membran
Thermal radiation detector having a suspended absorbing membrane

(30) Priorité: 16.09.2004 FR 0409846
(43) Date de publication de la demande: 22.03.2006
(73) Titulaire: Commissariat à l'Énergie Atomique et aux Énergies Alternatives, 75015 Paris (FR); ULIS, 38113 Veurey Voroize (FR)
(72) Inventeur: Yon, Jean-Jacques, 38360 Sassenage (FR); Vilain, Michel, 38450 Saint Georges de Commiers (FR); Astier, Astrid, 38340 Voreppe (FR)
(74) Mandataire: Hecké, Gérard

(56) Documents cités:
- US-A- 5 015 858
- US-B1- 6 690 014

## Description

### Domaine technique de l'invention

L'invention concerne un détecteur thermique de rayonnement électromagnétique comportant une membrane absorbante fixée en suspension, par des moyens de support thermiquement isolants, sur une face avant d'un substrat comportant au moins deux bornes de connexion électrique connectées électriquement à la membrane, les moyens de support comportant au moins un élément de support disposé entre le substrat et la membrane et ayant au moins une extrémité de base et une zone surélevée.

### État de la technique

Les avancées techniques récentes de la micro électronique du silicium et de la réalisation de couches minces ont donné un nouvel essor à la technologie des détecteurs thermiques de rayonnement comportant une membrane absorbante fixée en suspension sur un substrat par des moyens de support thermiquement isolants.

La microélectronique repose sur des procédés collectifs, réalisés au niveau d'une plaquette de silicium, dont peuvent aussi profiter les technologies des détecteurs thermiques à de nombreux titres. Ces techniques collectives ouvrent en effet la possibilité de réaliser des matrices de détecteurs de grande complexité, typiquement des matrices de 320x240 détecteurs, et également de réaliser un grand nombre de matrices sur une seule plaquette de silicium et donc de réduire le coût de fabrication unitaire des détecteurs.

Le document US6094127 décrit un bolomètre à trois étages superposés, notamment un étage comportant un circuit intégré, un étage de support et un étage d'absorption. L'étage d'absorption et l'étage de support sont espacés par des piliers solidaires de l'étage d'absorption. Grâce au fait que les moyens de support sont disposés entre l'étage d'absorption et l'étage comportant le circuit intégré, l'étage d'absorption peut occuper la totalité de la surface du bolomètre, ce qui permet d'augmenter le rapport de la surface sensible au rayonnement du bolomètre par rapport à sa surface totale et, ainsi, le rendement du bolomètre. Cependant, afin de connecter électriquement l'étage d'absorption à l'étage de support, un élément d'interconnexion électrique est intercalé entre les étages de support et d'absorption. Cet élément d'interconnexion électrique est constitué d'un canal conducteur enrobé dans une gaine diélectrique. Il en résulte un procédé de fabrication complexe, nécessitant un nombre élevé d'étapes de fabrication et présentant, ainsi, des coûts de fabrication élevés. En particulier, la présence de l'élément d'interconnexion électrique en contact avec l'étage d'absorption peut détériorer la qualité d'absorption et la sensibilité du détecteur. De plus, la fabrication d'un étage d'absorption ayant une bonne planéité est rendu difficile par la présence de l'élément d'interconnexion.

D'autres exemples de microstructures pour bolomètres sont donnés dans les documents US 6690014, JP 082 61 832 et CA 2 312 636.

### Objet de l'invention

L'invention a pour but de remédier à ces inconvénients et, plus particulièrement, de réaliser un détecteur ayant un grand rapport de la surface sensible au rayonnement du bolomètre par rapport à sa surface totale, tout en simplifiant son procédé de fabrication.

Selon l'invention, ce but est atteint par le fait que l'extrémité de base dudit élément de support est fixée à une partie supérieure d'un pilier conducteur ayant une base solidaire d'une borne de connexion électrique, une zone d'une face inférieure, sensiblement plane, de la membrane étant directement en contact avec la zone surélevée de l'élément de support et en ce que l'élément de support est constitué par un pont ayant une seconde extrémité de base fixée à une partie supérieure d'un second pilier, la zone surélevée étant constituée par une partie médiane du pont..

Selon un développement de l'invention, le second pilier est conducteur et le pont comporte deux couches conductrices isolées électriquement l'une de l'autre et destinées à connecter électriquement la membrane respectivement aux piliers conducteurs, les piliers conducteurs ayant chacun une base solidaire d'une borne de connexion électrique.

Selon un mode de réalisation préférentiel de l'invention, le détecteur comporte deux ponts comportant chacun une couche conductrice destinée à connecter la membrane au pilier conducteur correspondant.

La zone surélevée de l'élément de support est, de préférence, formé par un segment plan.

L'invention a également pour but un procédé de fabrication d'un détecteur comportant
- le dépôt d'une couche sacrificielle sur le substrat comportant au moins deux bornes de connexion électrique,
- la gravure de la couche sacrificielle de manière à obtenir des zones planes inférieure et supérieure parallèles au substrat, la zone plane inférieure recouvrant les bornes de connexion électrique,
- le dépôt, sur la couche sacrificielle, d'une couche diélectrique et d'une couche conductrice destinés à former l'élément de support,
- la gravure, dans la zone inférieure de la couche sacrificielle et dans l'élément de support, d'ouvertures débouchant respectivement sur les bornes de connexion électrique,
- le dépôt, dans lesdites ouvertures, d'une couche conductrice constituant les piliers conducteurs et la gravure de la couche conductrice constituant les piliers (8) conducteurs,
- la gravure de la couche diélectrique et de la couche conductrice,
- le dépôt d'une couche sacrificielle supplémentaire sur l'ensemble desdites couches de manière à former une surface plane commune avec la couche conductrice formant l'élément de support,
- le dépôt de la membrane sur ladite surface plane commune,
- l'enlèvement des couches sacrificielles.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente, en vue éclatée, un mode de réalisation particulier d'un détecteur selon l'invention.
Les figures 2 et 3 représentent, respectivement en coupe selon l'axe A-A et selon l'axe B-B, le détecteur représenté à la figure 1.
Les figures 4 et 5 représentent deux modes de réalisation particulier des éléments de support d'un détecteur selon l'invention.
La figure 6 illustre, en vue éclatée, un autre mode de réalisation particulier d'un détecteur selon l'invention.
La figure 7 illustre une vue de dessus d'un mode de réalisation particulier d'un détecteur selon l'invention.
Les figures 8 à 10 représentent différentes étapes d'un mode de réalisation particulier d'un procédé de fabrication selon l'invention et correspondent à une coupe selon l'axe C-C de la figure 1.
La figure 11 illustre la même étape que celle illustrée à la figure 10, en coupe selon l'axe D-D de la figure 1.

### Description de modes particuliers de réalisation

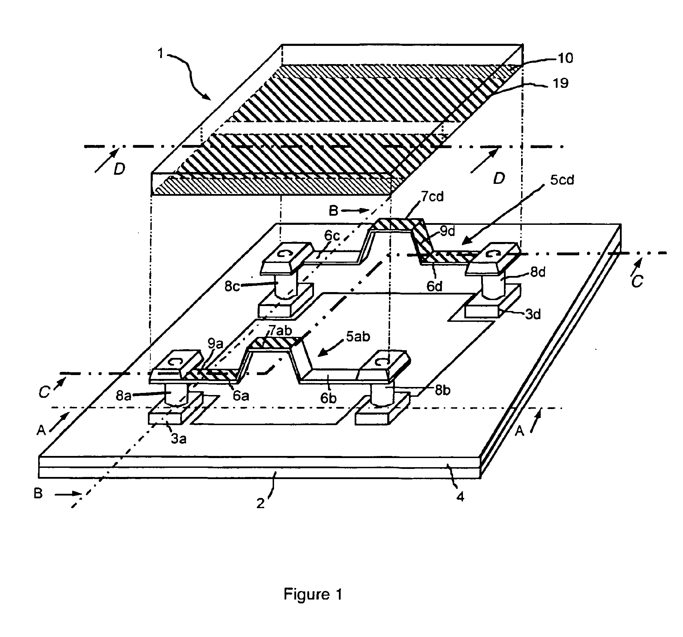

Sur la figure 1, un détecteur thermique de rayonnement électromagnétique comporte une membrane absorbante 1 fixée en suspension, par deux éléments 5 de support thermiquement isolants, sur une face avant d'un substrat 2. La membrane comporte, par exemple, une couche en un matériau ayant une résistivité variant en fonction de la température, par exemple en silicium amorphe. Le substrat 2 comporte deux bornes 3a et 3d de connexion électrique connectées électriquement à la membrane 1, comme décrit ci-dessous. Le substrat 2 peut comporter un circuit intégré 4 relié aux bornes 3 de connexion, permettant de polariser le détecteur et de traiter le signal électrique de sortie du détecteur. Le détecteur s'inscrit, par exemple dans le cas du rayonnement infrarouge, dans un champ carré de dix à cent micromètres de côté. Le substrat 2 est, de préférence, plan et peut être en silicium.

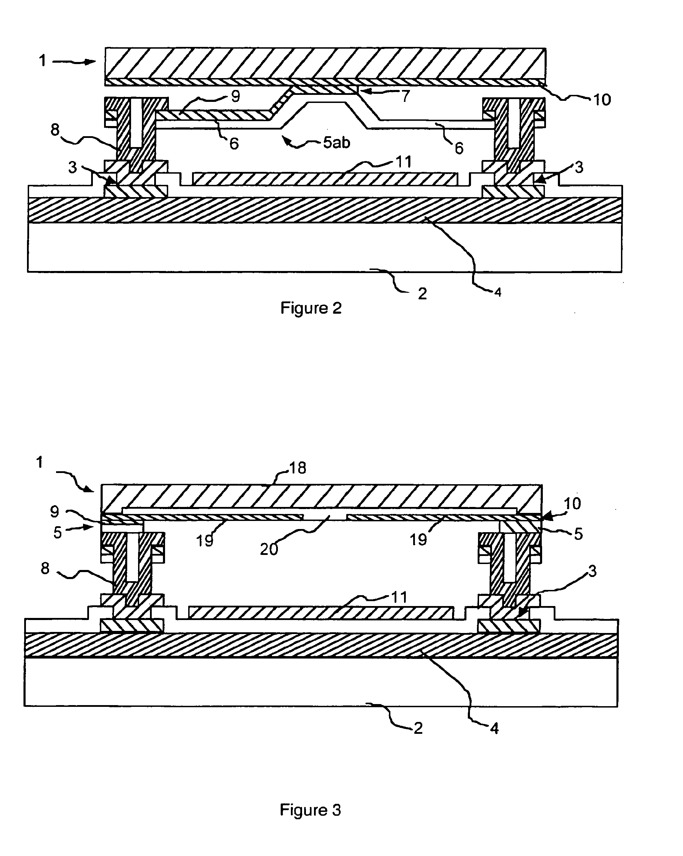

Sur la figure 1, les deux éléments 5 de support, disposés entre le substrat 2 et la membrane 1, sont constitués chacun par un pont (5ab et 5cd) ayant des première et seconde extrémités 6 de base (respectivement 6a et 6b pour le pont 5ab et 6c et 6d pour le pont 5cd) et une zone surélevée 7 (respectivement 7ab et 7cd) constituée par une partie médiane du pont. La première extrémité 6a de base du pont 5ab est fixée à une partie supérieure d'un premier pilier 8a conducteur ayant une base solidaire d'une première borne 3a de connexion électrique. La seconde extrémité 6b de base du pont 5ab est fixée à une partie supérieure d'un second pilier 8b. Une zone d'une face inférieure, sensiblement plane, de la membrane 1 est directement en contact avec la zone surélevée 7 de chaque élément 5 de support, comme illustré à la figure 2.

La zone surélevée 7 de l'élément 5 de support est, de préférence, formée par un segment plan, comme représenté sur la figure 1. Ainsi, on obtient une bonne tenue mécanique entre la membrane 1 et l'élément 5 de support. Par ailleurs, cette structure permet de maximiser le rapport de la surface sensible au rayonnement du détecteur par rapport à sa surface totale. En effet, la membrane 1 peut recouvrir sensiblement la totalité de la surface du détecteur.

La surface du contact entre la membrane 1 et l'élément 5 de support peut, par exemple, avoir une dimension linéaire comprise entre 20% et 40% de la dimension d'un côté de la membrane 1.

Les piliers 8 ont, par exemple, une hauteur de quelques micromètres, de manière à ce que l'élément 5 de support et le substrat 2 soient espacés de quelques micromètres.

Sur la figure 1, les deux ponts 5ab et 5cd comportent respectivement des couches conductrices 9a et 9d (représenté en hachuré) destinées chacune à connecter la membrane 1 à un des piliers 8 conducteurs. La couche conductrice 9a est disposée sur la zone surélevée 7ab du pont 5ab, sur l'extrémité 6a de base et sur une partie inclinée reliant la zone 7ab et l'extrémité 6a. La couche conductrice 9a est ainsi en contact avec le pilier 8a. La couche conductrice 9d est disposée sur la zone surélevée 7cd du pont 5cd, sur l'extrémité 6d de base et sur une partie inclinée reliant la zone 7cd et l'extrémité 6d. La couche conductrice 9d est ainsi en contact avec le pilier 8d. Les piliers 8b et 8c et les extrémités 6b et 6c n'ont pas de fonction électrique dans le mode de réalisation particulier représenté.

Les éléments 5 ayant pour fonction de maintenir mécaniquement et d'isoler thermiquement la membrane 1 du substrat 2, ils présentent un facteur de forme qui maximise leur longueur et qui minimise leur section. La couche conductrice 9 d'un élément 5 peut être réalisée en nitrure de titane, permettant d'assurer les fonctions de conducteur électrique. La membrane 1 comporte, à sa face inférieure plane, deux conducteurs électriques 10 plans (figure 1) couvrant une marge de la membrane 1 et s'étendant, de préférence, sensiblement sur toute une largeur de la membrane 1, afin de maximiser le volume de la membrane 1 traversé par le courant électrique. Les conducteurs électriques 10 sont disposés en contact respectivement avec les couches conductrices 9. Ainsi, un courant électrique parcourant la membrane 1 traverse les conducteurs électriques 10 plans, les couches conductrices 9, les piliers 8 conducteurs et les bornes 3 de connexion électrique. On obtient ainsi une bonne connexion électrique de la membrane 1 tout en isolant suffisamment thermiquement la membrane 1 du substrat 2. Le fait que les conducteurs 10 plans soient situés à la face inférieure de la membrane 1 conduit automatiquement à une formation particulièrement plane de la membrane 1, ce qui est favorable à l'absorption du rayonnement électromagnétique.

Comme représenté à la figure 2, le détecteur comporte, de préférence, une couche métallique réfléchissante 11 disposée sur le substrat 2. Cette couche permet, de manière connue, de maximiser l'absorption du rayonnement dans une gamme prédéterminée de longueurs d'onde.

Dans le mode de réalisation particulier représenté aux figures 1 à 3, les deux conducteurs électriques 10 sont associés chacun à un conducteur supplémentaire 19 (figure 1) disposé à la face inférieure de la membrane 1 et isolé d'une zone active 18 de la membrane 1 par une couche isolante 20 (figure 3). Chaque conducteur supplémentaire 19 couvre sensiblement la moitié de la surface de la membrane 1, avec un léger écart entre les conducteurs supplémentaires 19, de manière à ce que les deux conducteurs supplémentaires 19 ne soient pas en contact électrique. L'onde électromagnétique incidente produit un échauffement des conducteurs 10 et 19 grâce à un mécanisme d'absorption par électrons libres, particulièrement efficace lorsque la résistance par carré des conducteurs 10 et 19 correspond à l'impédance du vide. L'épaisseur et la résistivité des conducteurs 10 et 19 sont ajustées en conséquence. Par exemple, une couche en nitrure de titane ayant une résistivité de 150µΩ.cm et une épaisseur de 4 nm répond parfaitement à cette exigence. Une telle couche peut constituer l'ensemble des conducteurs 10 et 19, comme représenté à la figure 3. Ainsi, une zone marginale correspondant aux conducteurs 10 est disposée en contact avec la zone active 18, et la zone complémentaire à la zone marginale est isolée de la zone active 18 par l'intermédiaire de la couche isolante 20, de manière à constituer les conducteurs 19.

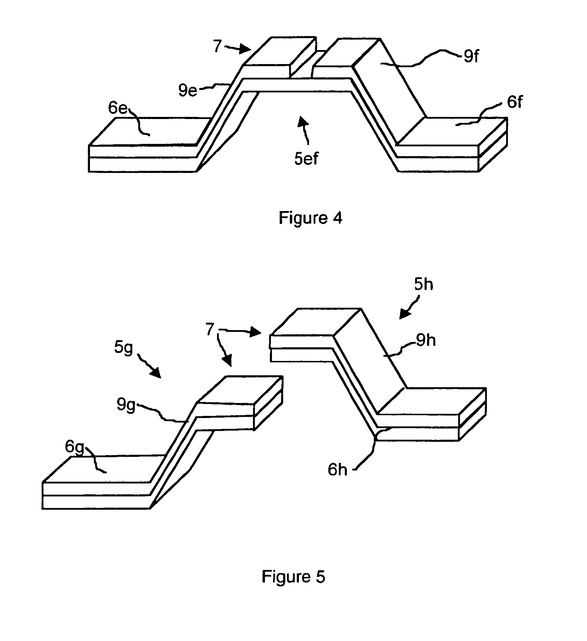

Comme représenté à la figure 4, l'élément 5 de support constitué par un pont 5ef peut comporter deux couches conductrices 9e et 9f disposées respectivement sur deux parties distinctes de la zone élevée 7, sur les extrémités 6 de base associées et sur les parties inclinées associées reliant la zone 7 et l'extrémité 6 (6e, 6f). Ainsi, la membrane 1 peut être fixée, avec sa partie centrale, sur la zone surélevée 7 d'un pont unique. Les deux couches conductrices 9e et 9f sont séparées par un écart permettant de les isoler électriquement l'une de l'autre. Chacune des deux couches conductrices 9e et 9f est destinée à être en contact avec un conducteur électrique 10 plan associé, de manière à connecter électriquement la membrane aux piliers 8 conducteurs auxquels est fixé le pont.

Dans le mode de réalisation particulier représenté à la figure 5, deux éléments 5 de support sont constitués respectivement par des premier et second bras distincts (5g et 5h) ayant chacun une extrémité 6 de base et une seconde extrémité constituant la zone surélevée 7. Ainsi, l'extrémité 6g de base du premier bras 5g peut être fixée à un premier pilier 8g conducteur et l'extrémité 6h de base du second bras 5h peut être fixée à un second pilier 8h. Sur chaque bras est disposée une couche conductrice 9g (9h) destinée à connecter la membrane à un des piliers 8g (8h) conducteurs. Chaque couche conductrice 9g (9h) est destinée à être en contact avec un conducteur 10 électrique correspondant. Ainsi, les deux bras permettent de connecter, par l'intermédiaire des piliers 8 conducteurs, deux conducteurs 10 électriques de la membrane 1 aux deux bornes 3 du substrat 2.

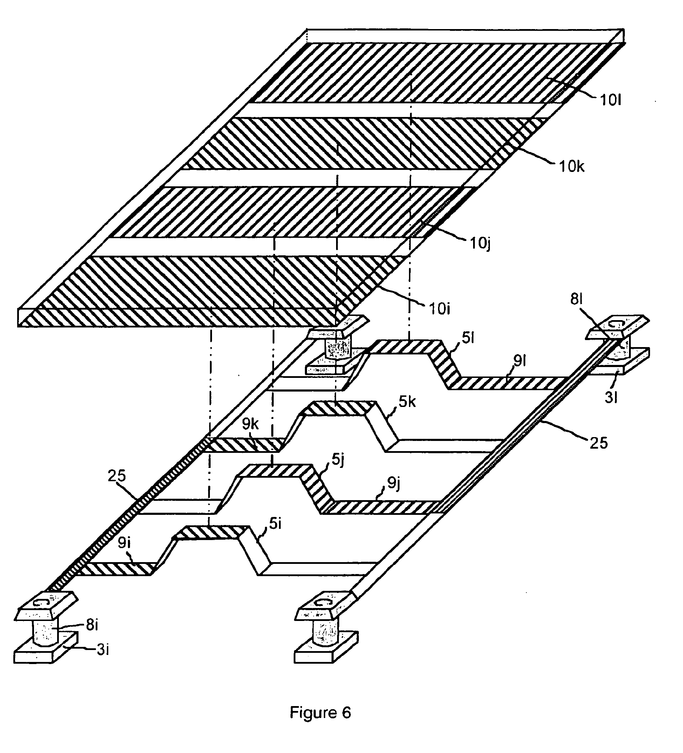

Dans un autre mode de réalisation particulier représenté à la figure 6, quatre conducteurs 10 (10i, 10j, 10k, 10l) sont associés respectivement à quatre éléments 5 (5i, 5j, 5k, 5l) de support constitués par des ponts. Les ponts comportent respectivement des zones 9i, 9j, 9k, 9l d'une couche conductrice 9, d'une part reliées entre elles deux à deux en alternance par l'intermédiaire de segments conducteurs 25 disposés entre les ponts, perpendiculairement aux ponts, et d'autre part, reliées respectivement aux bornes de connexion 3i, 3l correspondantes, par l'intermédiaire des piliers 8i, 8l correspondants. Les bornes 3 de connexion sont reliées, par exemple, respectivement aux bornes positives et négatives.

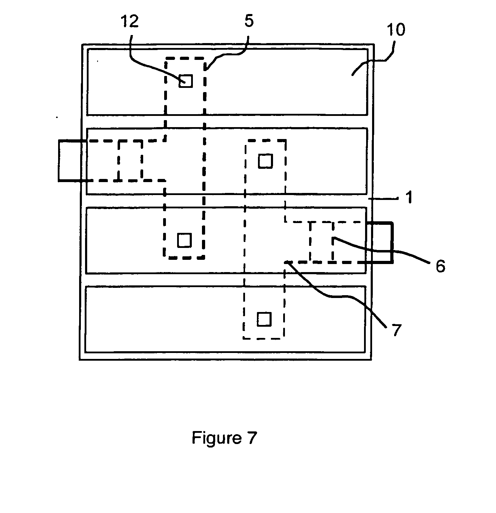

Dans le mode de réalisation particulier représenté à la figure 7, quatre conducteurs 10 sont associés en alternance à deux éléments 5 de support, représentés en pointillés. Les quatre conducteurs sont associés à une membrane 1 et destinés à être connectés en parallèle. La zone 7 surélevée de chaque élément 5 de support s'étend sur trois conducteurs 10. Les conducteurs 10 sont fixés aux zones 7 surélevés des éléments 5 de support. La membrane 1 et/ou les éléments 5 de support pouvant comporter une dernière couche isolante, cette dernière est supprimée à des emplacements 12 prédéterminés pour permettre un contact électrique entre la couche conductrice 9 d'un élément 5 de support et le conducteur 10 associé.

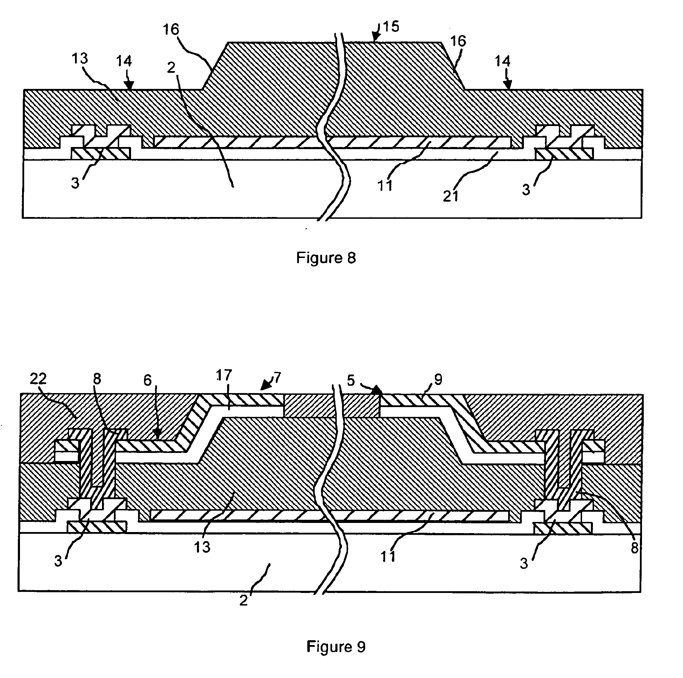

Comme représenté aux figures 8 à 11, un procédé de fabrication d'un détecteur peut comporter le dépôt d'une couche sacrificielle 13 sur le substrat 2 comportant deux bornes 3 de connexion électrique. Le substrat peut comporter une couche réfléchissante 11 séparée du substrat par une couche isolante 21.

La couche sacrificielle 13 est gravée de manière à obtenir des zones planes inférieure 14 et supérieure 15 parallèles au substrat 2. La zone plane inférieure 14 recouvre les deux bornes 3 de connexion électrique et elle est, de préférence, séparée de la zone plane supérieure 15 par une zone inclinée 16 ayant une pente comprise entre 60° et 80°, ce qui est plus favorable qu'une marche abrupte pour la suite des étapes. La différence des hauteurs des zones planes inférieure 14 et supérieure 15 est, de préférence, de l'ordre du micron.

Comme représenté à la figure 9, sur la couche sacrificielle 13 sont déposées une couche diélectrique 17, par exemple en oxyde de silicium, et une couche conductrice 9. La couche diélectrique 17 et la couche conductrice 9 sont destinées à former l'élément 5 de support. L'extrémité 6 de base de l'élément 5 de support est notamment formée par une partie des couches 17 et 9 disposée sur la zone plane inférieure 14, et la zone surélevée 7 de l'élément 5 de support est notamment formée par une partie des couches 17 et 9 disposée sur la zone plane supérieure 15.

Une couche diélectrique supplémentaire peut être déposée sur la couche conductrice 9. Ainsi, la couche conductrice 9 est disposée entre deux couches diélectriques. La couche diélectrique supplémentaire peut être enlevée localement par gravure sur la zone surélevée 7 pour permettre le contact entre la couche conductrice 9 et la membrane 1.

Ensuite, deux ouvertures sont gravées dans la zone inférieure 14 de la couche sacrificielle 13 et dans l'extrémité 6 de base de l'élément 5 de support, de manière à déboucher respectivement sur les deux bornes 3 de connexion électrique du substrat 2. Une couche conductrice, par exemple en siliciure de tungstène ou en titane, est déposée dans les ouvertures de manière à former les piliers 8 conducteurs (figure 9). Ladite couche conductrice constituant les piliers 8 conducteurs est ensuite gravée. Les piliers 8 sont, par exemple, cylindriques et creux. Les couches 9 et 17 sont ensuite gravées latéralement de manière à former l'élément 5 de support. Une couche sacrificielle supplémentaire 22 est déposée sur l'ensemble desdites couches (8, 13, 17 et 9), de manière à former une surface plane commune avec la partie surélevée de la couche conductrice 9. La couche sacrificielle supplémentaire 22 doit présenter une fluidité et une épaisseur adéquate pour obtenir une surface suffisamment plane. La couche sacrificielle supplémentaire 22 est, de préférence, amincie uniformément, afin d'assurer qu'elle affleure la couche conductrice 9.

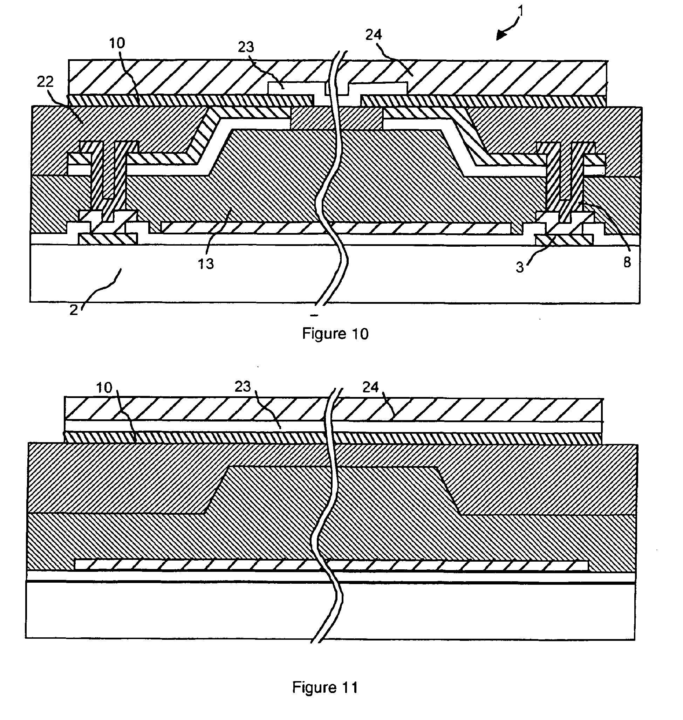

Ensuite, la membrane 1 est déposée (figures 10 et 11) sur ladite surface plane commune. Comme représenté aux figures 10 et 11, la membrane 1 est, de préférence, constituée par une couche mince métallique, par exemple en nitrure de titane, formant les conducteurs 10, par une couche diélectrique 23 et par une couche active 24 d'un matériau sensible à la température. La couche diélectrique 23 permet de délimiter les zones de contact entre les conducteurs 10 et la couche active 24 de la membrane 1. En fin de procédé, les couches sacrificielles 13 et 22 sont enlevées.

L'invention n'est pas limitée aux modes de réalisation représentés. En particulier le nombre de ponts et/ou de bras constituant le ou les éléments 5 de support peut être quelconque, la connexion électrique de la membrane se faisant, par exemple, par l'intermédiaire de couches conductrices disposées sur le ou les éléments 5 de support.

## Revendications

1. Détecteur thermique de rayonnement électromagnétique comportant une membrane (1) absorbante fixée en suspension, par des moyens de support thermiquement isolants, sur une face avant d'un substrat (2) comportant au moins deux bornes (3) de connexion électrique connectées électriquement à la membrane (1), les moyens de support comportant au moins un élément (5) de support disposé entre le substrat (2) et la membrane (1) et ayant au moins une extrémité (6) de base et une zone surélevée (7), détecteur **caractérisé en ce que** l'extrémité (6) de base dudit élément (5) de support est fixée à une partie supérieure d'un pilier (8) conducteur ayant une base solidaire d'une borne (3) de connexion électrique, une zone d'une face inférieure, sensiblement plane, de la membrane (1) étant directement en contact avec la zone surélevée (7) de l'élément (5) de support et **en ce que** l'élément (5) de support est constitué par un pont ayant une seconde extrémité (6) de base fixée à une partie supérieure d'un second pilier (8), la zone surélevée (7) étant constituée par une partie médiane du pont.

2. Détecteur selon la revendication 1, **caractérisé en ce que** le second pilier (8) est conducteur, et le pont comporte deux couches conductrices (9e, 9f) isolées électriquement l'une de l'autre et destinées à connecter électriquement la membrane (1) respectivement aux piliers (8) conducteurs, les piliers (8) conducteurs ayant chacun une base solidaire d'une borne (3) de connexion électrique.

3. Détecteur selon la revendication 1, **caractérisé en ce qu'**il comporte deux ponts comportant chacun une couche conductrice (9a, 9d) destinée à connecter la membrane (1) au pilier (8a, 8d) conducteur correspondant.

4. Détecteur selon l'une des revendications 2 et 3, **caractérisé en ce que** la membrane (1) comporte, à sa face inférieure sensiblement plane, au moins deux conducteurs (10) électriques plans disposés en contact respectivement avec les couches conductrices (9).

5. Détecteur selon la revendication 4, **caractérisé en ce que** les conducteurs (10) sont situés en marge de la membrane.

6. Détecteur selon l'une des revendications 4 et 5, **caractérisé en ce que** les conducteurs (10) s'étendent sensiblement sur toute une largeur de la membrane (1).

7. Détecteur selon l'une quelconque des revendications 1 à 6, **caractérisé en ce que** la zone surélevée (7) de l'élément (5) de support est formé par un segment plan.

8. Procédé de fabrication d'un détecteur selon l'une quelconque des revendications 1 à 7, **caractérisé en ce qu'**il comporte
- le dépôt d'une couche sacrificielle (13) sur le substrat (2) comportant au moins deux bornes (3) de connexion électrique,
- la gravure de la couche sacrificielle (13) de manière à obtenir des zones planes inférieure (14) et supérieure (15) parallèles au substrat (2), la zone plane inférieure (14) recouvrant les bornes (3) de connexion électrique,
- le dépôt, sur la couche sacrificielle (13), d'une couche diélectrique (17) et d'une couche conductrice (9) destinés à former l'élément (5) de support,
- la gravure, dans la zone inférieure (14) de la couche sacrificielle (13) et dans l'élément (5) de support, d'ouvertures débouchant respectivement sur les bornes (3) de connexion électrique,
- le dépôt, dans lesdites ouvertures, d'une couche conductrice constituant les piliers (8) conducteurs et la gravure de la couche conductrice constituant les piliers (8) conducteurs,
- la gravure de la couche diélectrique (17) et de la couche conductrice (9),
- le dépôt d'une couche sacrificielle supplémentaire (22) sur l'ensemble desdites couches (13, 17, 9, 8) de manière à former une surface plane commune avec la couche conductrice (9) formant l'élément de support,
- le dépôt de la membrane (1) sur ladite surface plane commune,
- l'enlèvement des couches sacrificielles (13, 22).

## Claims

1. Thermal electromagnetic radiation detector comprising an absorbent membrane (1) fixed in suspension by thermally insulating support means onto a front face of a substrate (2) comprising at least two electric connection terminals (3) electrically connected to the membrane (1), the support means comprising at least one support part (5) arranged between the substrate (2) and membrane (1) and having at least one base end (6) and a raised zone (7), detector **characterized in that** the base end (6) of said support part (5) is fixed to a top part of a conducting pillar (8) having a base fixedly secured to an electric connection terminal (3), a substantially flat zone of a bottom face of the membrane (1) being directly in contact with the raised zone (7) of the support part (5) and **in that** the support part (5) is formed by a bridge having a second base end (6) fixed to a top part of a second pillar (8), the raised zone (7) being formed by a middle part of the bridge.

2. Detector according to claim 1, **characterized in that** the second pillar (8) is conducting and the bridge comprises two conducting layers (9e, 9f) electrically insulated from one another and designed to electrically connect the membrane (1) respectively to the conducting pillars (8), the conducting pillars (8) each having a base fixedly secured to an electric connection terminal (3).

3. Detector according to claim 1, **characterized in that** it comprises two bridges each comprising a conducting layer (9a, 9d) designed to connect the membrane (1) to the corresponding conducting pillar (8a, 8d).

4. Detector according to one of the claims 2 and 3, **characterized in that** the membrane (1) comprises, on its substantially flat bottom face, at least two flat electric conductors (10) arranged in contact respectively with the conducting layers (9).

5. Detector according to claim 3, **characterized in that** the conductors (10) are situated on the edge of the membrane (1).

6. Detector according to one of the claims 4 and 5, **characterized in that** the conductors (10) extend substantially over the whole width of the membrane (1).

7. Detector according to any one of the claims 1 to 6, **characterized in that** the raised zone (7) of the support part (5) is formed by a flat segment.

8. Fabrication process of a detector according to any one of the claims 1 to 7, **characterized in that** it comprises
- deposition of a sacrificial layer (13) on the substrate (2) comprising at least two electric connection terminals (3),
- etching of the sacrificial layer (13) so as to obtain a bottom flat zone (14) and a top flat zone (15) parallel to the substrate (2), the bottom flat zone (14) covering the electric connection terminals (3),
- deposition, on the sacrificial layer (13), of a dielectric layer (17) and of a conducting layer (9) designed to form the support part (5),
- etching, in the bottom zone (14) of the sacrificial layer (13) and in the support part (5), of openings opening out respectively onto the electric connection terminals (3),
- deposition, in said openings, of a conducting layer forming the conducting pillars (8) and etching of the conducting layer forming the conducting pillars (8),
- etching of the dielectric layer (17) and of the conducting layer (9),
- deposition of an additional sacrificial layer (22) on the whole assembly formed by said layers (13, 17, 9, 8) so as to form a common flat surface with the conducting layer (9) forming the support part,
- deposition of the membrane (1) on said common flat surface,
- removal of the sacrificial layers (13, 22).

## Patentansprüche

1. Thermischer Detektor für elektromagnetische Strahlung mit einer absorbierenden Membran (1), die mittels thermisch isolierender Tragvorrichtungen an einer Vorderseite eines Substrats (2) aufgehängt ist, der mindestens zwei Elektroanschlussklemmen (3) umfasst, die elektrisch an die Membran (1) angeschlossen sind, wobei die Tragvorrichtungen mindestens ein Tragelement (5) umfassen, das zwischen dem Substrat (2) und der Membran (1) angeordnet ist und mindestens ein Basisende (6) und einen erhöhten Bereich (7) aufweist, Detektor, der **dadurch gekennzeichnet ist, dass** das Basisende (6) des genannten Tragelements (5) an einem oberen Ende einer leitenden Stütze (8) befestigt ist, die eine Basis hat, die fest verbunden ist mit einer Elektroanschlussklemme (3), wobei ein Bereich einer im Wesentlichen ebenen Unterseite der Membran (1) direkt in Kontakt ist mit dem erhöhten Bereich (7) des Tragelements (5), sowie dadurch, dass das Tragelement (5) von einer Brücke mit einem zweiten Basisende (6) gebildet wird, das an einem oberen Bereich einer zweiten Stütze (8) befestigt ist, wobei der erhöhte Bereich (7) von einem Mittelteil der Brücke gebildet wird.

2. Detektor nach Anspruch 1, **dadurch gekennzeichnet, dass** die zweite Stütze (8) leitend ist und die Brücke zwei leitende Schichten (9e, 9f) umfasst, die voneinander elektrisch isoliert und dazu bestimmt sind, die Membran (1) jeweils mit den leitenden Stützen (8) zu verbinden, wobei die leitenden Stützen (8) jeweils eine Basis haben, die fest verbunden ist mit einer Elektroanschlussklemme (3).

3. Detektor nach Anspruch 1, **dadurch gekennzeichnet, dass** er zwei Brücken umfasst, die jeweils eine leitende Schicht (9a, 9d) aufweisen, die dazu vorgesehen ist, die Membran (1) mit der entsprechenden leitenden Stütze (8a, 8d) zu verbinden.

4. Detektor nach einem der Ansprüche 2 und 3, **dadurch gekennzeichnet, dass** die Membran (1) an ihrer im Wesentlichen ebenen Unterseite mindestens zwei ebene elektrische Leiter (10) umfasst, die jeweils in Kontakt mit den leitenden Schichten (9) angeordnet sind.

5. Detektor nach Anspruch 4, **dadurch gekennzeichnet, dass** die Leiter (10) am Rande der Membran angeordnet sind.

6. Detektor nach einem der Ansprüche 4 und 5, **dadurch gekennzeichnet, dass** die Leiter (10) sich im Wesentlichen über eine ganze Breite der Membran erstrecken.

7. Detektor nach einem der Ansprüche 1 bis 6, **dadurch gekennzeichnet, dass** der erhöhte Bereich (7) des Tragelements (5) von einem ebenen Segment gebildet wird.

8. Verfahren zur Herstellung eines Detektors nach einem der Ansprüche 1 bis 7, **dadurch gekennzeichnet, dass** es umfasst:
- Aufbringen einer Opferschicht (13) auf das Substrat (2), das mindestens zwei Elektroanschlussklemmen (3) umfasst,
- Ätzen der Opferschicht (13) in der Weise, dass man einen ebenen unteren Bereich (14) und einen ebenen oberen Bereich (15) erhält, die parallel zum Substrat (2) sind, wobei der untere ebene Bereich (14) die Elektroanschlussklemmen (3) bedeckt,
- Aufbringen einer dielektrischen Schicht (17) und einer leitenden Schicht (9) auf die Opferschicht (13), die dazu bestimmt sind, das Tragelement (5) zu bilden,
- Ätzen von direkt in die Elektroanschlussklemmen (3) mündenden Öffnungen in den unteren Bereich (14) der Opferschicht (13) und in das Tragelement (5),
- Aufbringen einer leitenden Schicht in den Öffnungen, welche die Stützen (8) bildet und Ätzen der leitenden Schicht, welche die leitenden Stützen (8) bildet
- Ätzen der dielektrischen Schicht (17) und der leitenden Schicht (9),
- Aufbringen einer zusätzlichen Opferschicht (22) auf alle Schichten (13, 17, 9, 8), um eine gemeinsame ebene Oberfläche mit der leitenden Schicht (9) herzustellen, die das Tragelement bildet,
- Aufbringen der Membran (1) auf die genannte gemeinsame ebene Oberfläche,
- Entfernen der Opferschichten (13, 22).
